# EUROPÄISCHE PATENTSCHRIFT

(11) **EP 0 553 490 B1**
(45) Veröffentlichungstag und Bekanntmachung des Hinweises auf die Patenterteilung: **23.04.1997**
(21) Anmeldenummer: 92122020.8
(22) Anmeldetag: 25.12.1992
(51) Int. Cl.: B64C 39/00, B64C 29/00, B64C 39/06

(54) **Fluggerät**
Flying vehicle
Appareil volant

(30) Priorität: 29.01.1992 CH 258/92
(43) Veröffentlichungstag der Anmeldung: 04.08.1993
(73) Patentinhaber: Sky Disc Holding SA, CH-1700 Fribourg (CH)
(72) Erfinder: Bucher, Franz, CH-4058 Basel (CH)
(74) Vertreter: Blum, Rudolf Emil Ernst

(56) Entgegenhaltungen:
- EP-A- 0 393 410
- WO-A-91/15400
- US-A- 2 843 339
- US-A- 4 196 877

## Beschreibung

Die Erfindung betrifft ein Fluggerät sowie ein Verfahren zur Steuerung eines solchen Fluggerätes gemäss den Oberbegriffen der unabhängigen Ansprüche. Ein solches Fluggerät ist in der Europäischen Patentveröffentlichung EP-A-0 393 410 beschrieben. Versuche haben ergeben, dass bei einem solchen Fluggerät die Fluggeschwindigkeit in der Hauptflugrichtung auf einen relativ tiefen Wert beschränkt ist. Bei höheren Fluggeschwindigkeiten beeinflussen sich die Rotorströmung und die Anströmung des Rundflügels, der durch das Gehäuse gebildet wird, in negativer Weise so, dass das Fluggerät ab einer bestimmten Geschwindigkeit in eine unstabile Fluglage geraten kann. Die Strömungsverhältnisse an Rundflügeln sind heute noch weitgehend unbekannt. Dies gilt umso mehr für den Fall, bei welchem ein Rundflügel im Zentrum durch einen Rotorstrahl durchströmt wird.

Es stellt sich damit die Aufgabe, das genannte Fluggerät so auszugestalten, dass neben dem gesteuerten Schwebeflug auch ein angetriebener Gleitflug mit hoher Geschwindigkeit unter Ausnutzung des dynamischen Auftriebs des Rundflügels möglich wird, wobei die Konstruktion des Fluggerätes möglichst einfach sein sollte.

Diese Aufgabe wird durch die in den Ansprüchen genannten Merkmale gelöst.

Durch die radiale Anordnung der Lamellen wird es möglich, alle Steuersegmente gleich aufzubauen, was die Konstruktion vereinfacht.

Versuche des Anmelders mit durchströmten Rundflügein haben gezeigt, dass durch die Rotorströmung die dynamischen Auftriebskräfte so beeinflusst werden, dass ab einer bestimmten Geschwindigkeit die Auftriebskräfte im in Flugrichtung vorderen Bereich stark zu- und im hinteren Bereich des Rundflügels stark abnehmen. Eine Kompensation dieses Effekts durch entsprechende Umlenkung des Rotorstrahls ist ab dieser Geschwindigkeit nicht mehr möglich. Andererseits steht für die Steuerung im Schwebeflug nur diese Umlenkung des Rotorstrahls zur Verfügung.

Es hat sich überraschend gezeigt, dass sich der Geschwindigkeitsbereich, in welchem die Steuerung durch Umlenkung des Rotorstrahls sowie der Auftrieb und Vortrieb vorwiegend durch den Rotor erfolgt, mit einem Geschwindigkeitsbereich überschneidet, in welchem durch Anströmung eines Leitwerks eine ausreichende dynamische Steuerkraft erzeugt werden kann, um den geschilderten Effekt auf den durchströmten Rundflügel zu kompensieren. Dieser Uebergangsbereich erlaubt es, in einen höheren Geschwindigkeitsbereich vorzustossen, in welchem der Rundflügel allein einen ausreichenden dynamischen Auftrieb erzeugt, so dass der Beitrag des Rotors unnötig wird, und damit keine Durchströmung des Rundflügels mehr stattfinden muss.

Während im tiefen Geschwindigkeitsbereich Auf- und Vortrieb sowie Steuerung allein durch den Rotorstrahl und im hohen Geschwindigkeitsbereich der Auftrieb dynamisch durch Anströmung des geschlossenen Rundflügels erfolgt, liegt im Uebergangsbereich ein "gemischter" Zustand vor, wo sowohl der Rotorstrahl, als auch die Anströmung des Seitwerks bzw. Rundflügels zur Steuerung und Auftriebserzeugung beitragen.

Nachfolgend wird die beanspruchte Erfindung anhand eines Ausführungsbeispiels verdeutlicht. Dieses wird mit Hilfe der beiliegenden Zeichnungen erläutert. Darin zeigen:
Figur 1 eine Seitenansicht eines Beispiels eines Fluggerätes,
Figur 2 eine Frontansicht des Fluggerätes nach Figur 1,
Figur 3 eine Aufsicht auf das Fluggerät nach Figur 1,
Figur 4 eine Aufsicht auf einen Teil des Rotorbereichs und der zentralen Kabine,
Figur 5 eine Schnittansicht durch die Mittelachse des entsprechenden Bereichs,
Figur 6 eine schematische Ansicht der Lamellenfelder,
Figur 7 eine Aufsicht auf das Ausführungsbeispiel des Fluggeräts,
Figur 8 eine Frontansicht des Fluggeräts nach Figur 7,
Figur 9 eine Seitenansicht des Fluggeräts nach Figur 8,
Figur 10 die Ausführung der Lamellenfelder, und
Figur 11 eine Illustration der Kraftverhältnisse im Uebergangsflug.

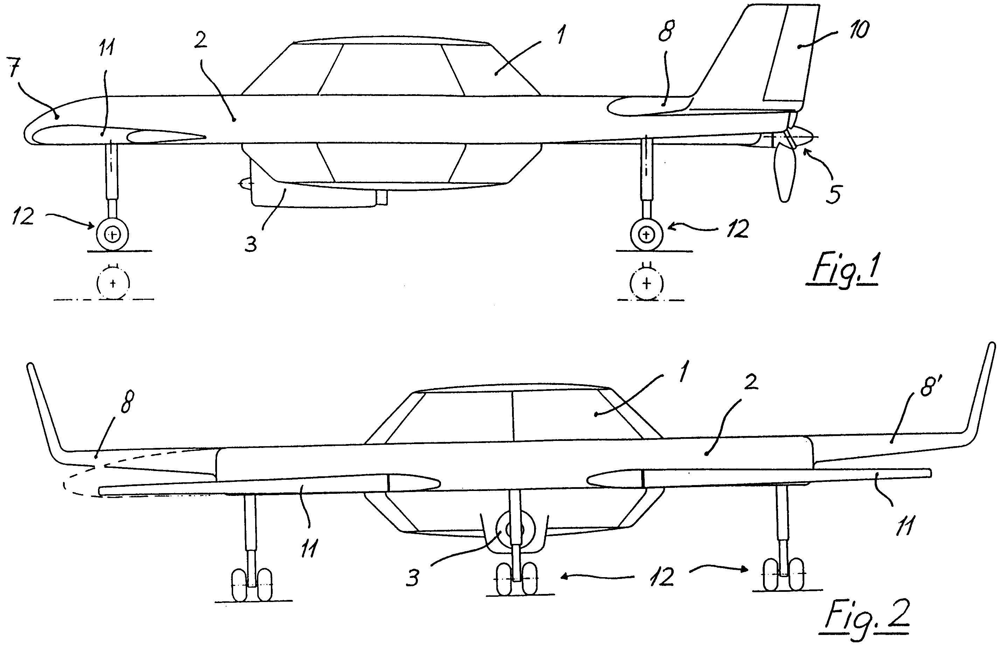

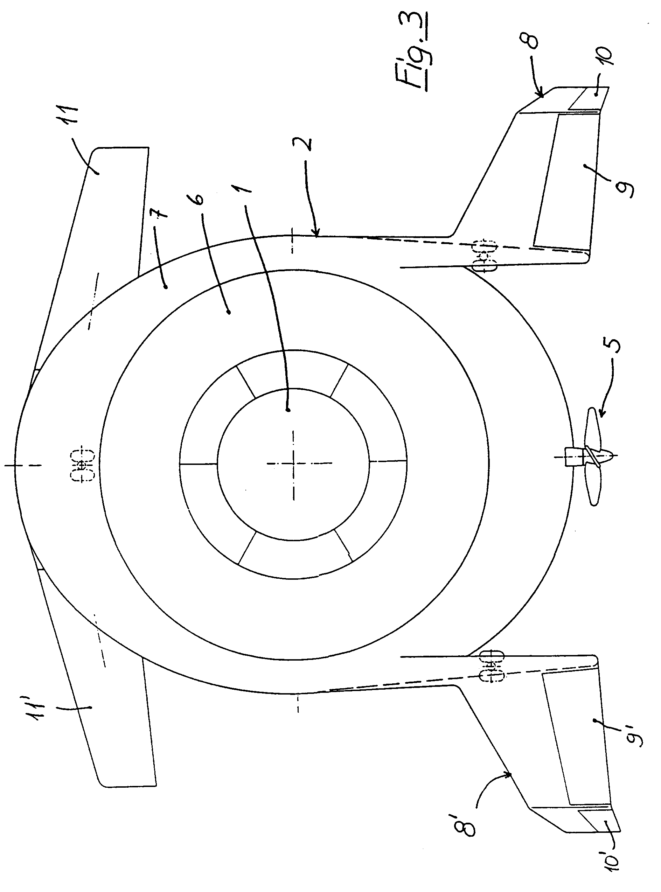

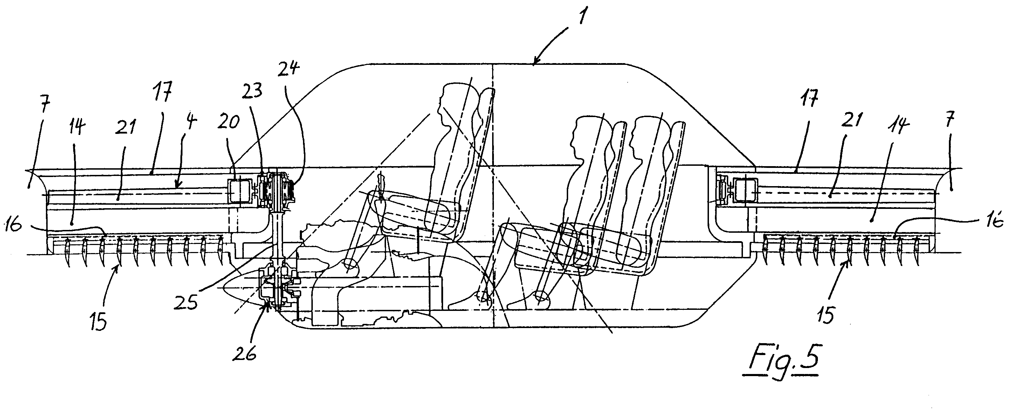

Aus den Figuren 1 bis 3 ist zunächst die äussere Gestaltung des Gehäuses und der Leitwerke eines Fluggerätes ersichtlich, das für sechs Personen bestimmt ist. Dieses Fluggerät entspricht bis auf die Anordnung der Lamellenfelder einer Ausführung der Erfindung und soll das Verständnis der Erfindung erleichtern. Im Zentrum eines Rotorgehäuses 2 ist eine Kabine 1 angeordnet, die sich nach oben und unten über das Rotorgehäuse hinaus erstreckt. In dieser Kabine sind Sitzplätze für die sechs Personen, einschliesslich zweier Pilotenplätze, sowie eine Antriebsturbine 3 angeordnet (vergl. dazu auch Figur 5).

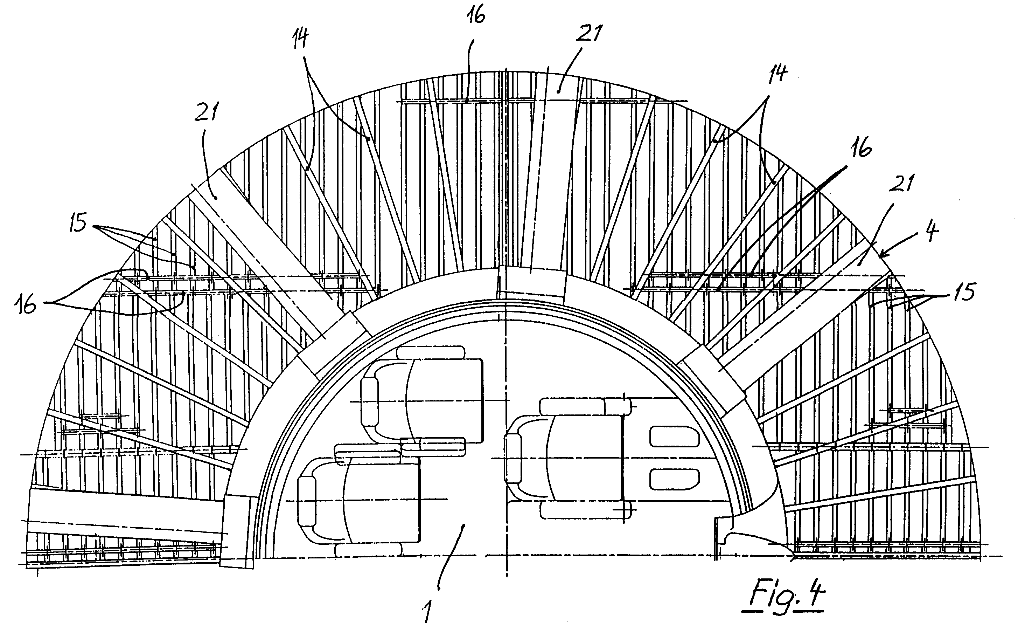

Die Antriebsturbine 3 treibt wahlweise einen liegend angeordneten Rotor 4 (vergl. Fig. 4, 5) bzw. einen horizontal wirkenden Propeller 5 an. Das Rotorgehäuse 2 besitzt einen im Schwebeflug vom Rotorstrahl durchsetzen ringförmigen Luftführungsbereich 6 und einen aussen daran angrenzenden Gehäuseteil 7, der einen ovalen Rundflügel mit einem auftriebserzeugenden Profil bildet. Der Begriff "Rundflügel" soll sich auch auf Flügelformen beziehen, deren Spannweite im wesentlichen ihrer Länge entspricht. Aussen am Gehäuseteil 7 ist ein geteiltes, hinteres Leitwerk 8, 8'angeordnet, das sich ausserhalb der Wirkung des Rotorstrahls befindet, der im Schwebeflug den Rundflügel durchsetzt und ihn bei Vorwärtsbewegung überstreicht. Das hintere Leitwerk 8, 8' besitzt Höhenruder 9, 9' und Seitenruder 10, 10', die zur Steuerung des Fluggerätes im Gleitflug sowie im Uebergangsbereich zwischen Schwebeflug und Gleitflug dienen, wie noch näher erläutert wird. Ferner können vordere Stabilisierungsflügel 11, 11' vorgesehen sein. Das Leitwerk kann auch im (vergrösserten) Rundflügel integriert sein.

Am Gehäuse ist ferner ein einklappbares Fahrgestell 12 angeordnet.

Der mechanische Aufbau des Rotors 4 dieses Ausführungsbeispiels und seines Antriebs ist den Figuren 4 und 5 zu entnehmen. An einem ringförmigen Kastenprofil 20 sind aussen 8 Rotorblätter 21 befestigt, deren Anstellwinkel zur Steuerung fest eingestellt ist. Je nach Anordnung der Blätter und Drehzahl des Rotors können auch mehr oder gegebenenfalls weniger Rotorblätter vorgesehen sein. Am Kastenprofil ist ein Rollenlager mit innenliegendem Zahnring angeordnet, in das ein Antriebsritzel 23 eingreift, welches auf einer Abtriebswelle 25 eines Differentialgetriebes 26 sitzt. Die andere Abtriebswelle des Differentialgetriebes 26 (nicht dargestellt) treibt den horizontal wirkenden Propeller 5. Durch Bremsung der Abtriebswelle 25 für den Rotor kann die Rotordrehzahl bis zum Stillstand herabgesetzt werden, um das Drehmoment des Antriebs über das Differentialgetriebe teilweise oder ganz auf den Propeller 5 zu übertragen und umgekehrt. Während im Schwebeflug die Antriebsturbine 3 ausschliesslich auf den Rotor 4 wirkt, wird dieser im angetriebenen Gleitflug angehalten und das Antriebsmoment ganz auf den Propeller 5 übertragen.

Unterhalb des Rotors 4 sind in einer ersten Ebene leicht angestellte Leitschaufeln 14 eines statischen Strömungsleitsystems angeordnet. Diese Leitschaufeln 14 erstrecken sich radial zwischen der Kabine 1 und dem äusseren Gehäuseteil 7 des Rotorgehäuses. Ihre Funktion besteht darin, die rotative Komponente des Rotorstrahls aufzunehmen und eine Zone erhöhten Drucks aufzubauen, welche sich durch die darunter befindliche Anordnung schwenkbarer Lamellen 15 entlädt. Die Leitschaufeln 14 stellen überdies einen Teil der tragenden Gehäusestruktur dar. Im vorliegenden Beispiel sind insgesamt 36 solche radialen Leitschaufeln 14 vorgesehen, was zu einer guten Aussteifung des Rundflügels führt.

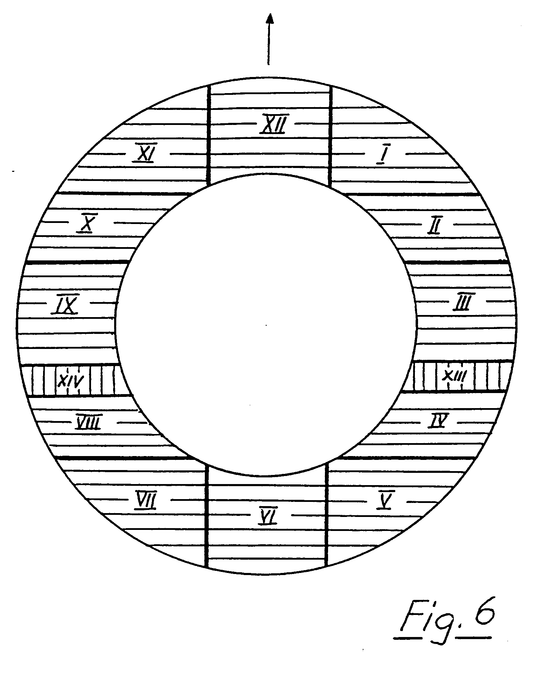

In einer zweiten Ebene unterhalb des Rotors 4 sind zur Steuerung der Austrittsrichtung und Austrittsgeschwindigkeit des Rotorstrahls schwenkbare Lamellen 15 angeordnet. Diese sind bei dieser Ausführung grösstenteils quer zur Hauptflugrichtung ausgerichtet. Wie noch erläutert wird, ist die Lamellenanordnung in einzelne Felder aufgeteilt, in welchen die Lamellen mittels servogetriebenen Betätigungsstangen 16 kollektiv parallel oder paarweise gegenläufig schwenkbar sind (vergl. Fig. 6).

An seiner Oberseite ist der Rotor 4 durch ein Deckgitter mit in der Hauptflugrichtung parallel verlaufenden Streben 17 geschützt.

Wie bereits einleitend erwähnt, besitzt ein erfindungsgemässes Fluggerät mehrere zu unterscheidende Flugzustände, die überlappend ineinander übergehen, was für einen sicheren Betrieb unabdingbar ist.

Einen ersten Flugzustand bildet der Schwebeflug. Der Auftrieb, die Bewegungen und die Lagesteuerung ergeben sich durch die Beeinflussung des Rotorstrahls, d.h. dessen Drosselung bzw. Ablenkung in den einzelnen Feldern der Lamellenanordnung. In Figur 6 ist ein erstes Ausführungsbeispiel der Lamellenanordnung schematisch dargestellt. Die einzelnen Felder sind mit römischen Zahlen bezeichnet.

Werden die Lamellen in einem Feld aus einer Vertikalposition kollektiv parallel verschwenkt, so bewirkt dies eine mehr oder weniger starke Ablenkung eines Teils des Rotorstrahls. Der entsprechende Reaktionsvektor ergibt eine horizontale Kraftkomponente, welche als Vortriebskraft oder Steuerkraft einsetzbar ist. Werden die Lamellen paarweise gegenläufig verschwenkt, so ergibt sich keine derartige horizontale Kraftkomponente, doch wird die Auftriebskraft im betreffenden Feld herabgesetzt.

Nach diesen Grundsätzen kann im Schwebeflug durch entsprechende Lamellenverstellung die Lage und Bewegung des Fluggerätes beeinflusst werden.

Dabei dienen die Felder XII und VI mit parallel verschwenkten Lamellen zur Erzeugung einer Vortriebskraft in oder entgegen der Hauptflugrichtung. Die Felder III und IX mit jeweils in unterschiedlichem Sinn parallel verschwenkten Lamellen sind für Drehungen um die Hochachse vorgesehen und wirken bei gleichsinnig parallel verschwenkten Lamellen ebenfalls bei der Vortriebserzeugung mit.

Die acht Felder I, II, IV, V, VII, VIII und X, XI dienen kollektiv der Steuerung der Vertikalbewegung des Fluggerätes, wofür die Lamellen paarweise gegenläufig verschwenkt werden, so dass die Auftriebskräfte ohne Horizontalkomponenten beeinflusst werden. Für die überlagerte Neigung um die Querachse wirken dabei die Felder I und XI sowie V und VII antagonistisch zusammen. Werden z.B. in den Feldern I und XI die Lamellen etwas geschlossen, neigt sich das Fluggerät wegen des reduzierten Auftriebs um die Querachse nach vorn etc. Zur überlagerten Steuerung der Neigung um die Längsachse werden in entsprechender Weise die Felder II und IV sowie X und VIII antagonistisch gesteuert.

Die Felder XIV und XIII schliesslich dienen bei paralleler Verschwenkung der Lamellen für Erzeugung seitlicher Schiebebewegungen.

Grundsätzlich erfolgen die Steuerauslenkungen der Lamellen aus der offenen Position, wobei sich die Lagesteuerung der Steuerung der Vertikal- und Horizontalbewegung überlagert. Damit bleibt der Rotorstrahl über den gesamten Umfang wirksam und es treten keine starken, lokalen Druckschwankungen auf, welche zu Schlägen auf die Rotorblätter führen würden.

Im Schwebeflug ist auf diese Weise eine Geschwindigkeit bis zu ca. 55 km/h erreichbar. Wie bereits ausgeführt, tritt dabei eine zunehmende Anströmung des rotorstrahldurchsetzten Rundflügels auf, wobei der Auftrieb an der Vorderseite des Rundflügels viel stärker zunimmt, als an seiner Rückseite. Ab ca.35 km/h wird das Leitwerk 8, 8' zunehmend zur Kompensation dieses Moments wirksam.

Zwischen ca. 55 km/h und ca. 90 km/h tritt ein Uebergangszustand ein. Spätestens in diesem Geschwindigkeitsbereich erfolgt der Vortrieb mindestens teilweise durch den Propeller 5, welcher ein vom Rotorstrahl unabhängiges Vortriebsmittel bildet. In diesem Flugzustand ist der Steuereinfluss der Lamellen abnehmend und wird zunehmend durch die Wirkung des Leitwerks ergänzt, das sich seitlich ausserhalb des Rotorstrahls befindet und deshalb vom abströmenden Rotorstrahl nicht beeinflusst wird. Damit kann es eine Steuerwirkung zur Kompensation des ungleich verteilten Auftriebs am Rundflügel entfalten, unabhängig vom Rotorstrahl und der Anströmung des Rundflügels.

Ab ca. 90 km/h bis zur Maximalgeschwindigkeit von ca. 400 km/h (bei SLSC, "Sea Level Standard Conditions") wird der Vortrieb schliesslich vollständig durch den Propeller 5 und der Auftrieb durch den Rundflügel 2 erzeugt. Die Lamellen sind geschlossen und der Rotor ist unwirksam. Der Rundflügel ist damit nicht mehr durchströmt. Die Steuerung wird in an sich herkömmlicher Art vom Leitwerk 8, 8' übernommen. Es versteht sich, dass die Vortriebskraft statt durch den Propeller 5 auch auf andere Weise erzeugt werden kann. Wird als Antrieb eine sogenannte konvertible Turbine eingesetzt, so kann diese im Gleitflug direkt als Rückstossantrieb wirken.

Das Leitwerk 8, 8' bzw. 11, 11' erlaubt es, wie bereits eingangs erwähnt, das im Schwebeflug bei durchströmtem Rundflügel zunehmende Moment um die Querachse zu kompensieren, bis ein ausreichender dynamischer Auftrieb ohne Wirkung des Rotorstrahls vorhanden ist, wonach in den angetriebenen Gleitflug übergegangen wird, in welchem auf oekonomische Art eine hohe Fluggeschwindigkeit erzielbar ist.

Da das Fluggerät im Gleitflug die kleinste Antriebsleistung braucht, kann es bei Ueberlastung des Geräts unter Umständen nicht möglich sein, die Betriebsarten "Schwebeflug" und "Uebergangsflug" zu benutzen, während der Gleitflug und ein konventioneller Start mit Propellerkraft immer noch möglich ist. So kann ein voll betanktes, schwer beladenes Fluggerät immer noch im Gleitflug gestartet werden und nach längerem Flug aber in den Schwebeflug übergehen, nachdem sich das Gewicht des Treibstoffs genügend verringert hat.

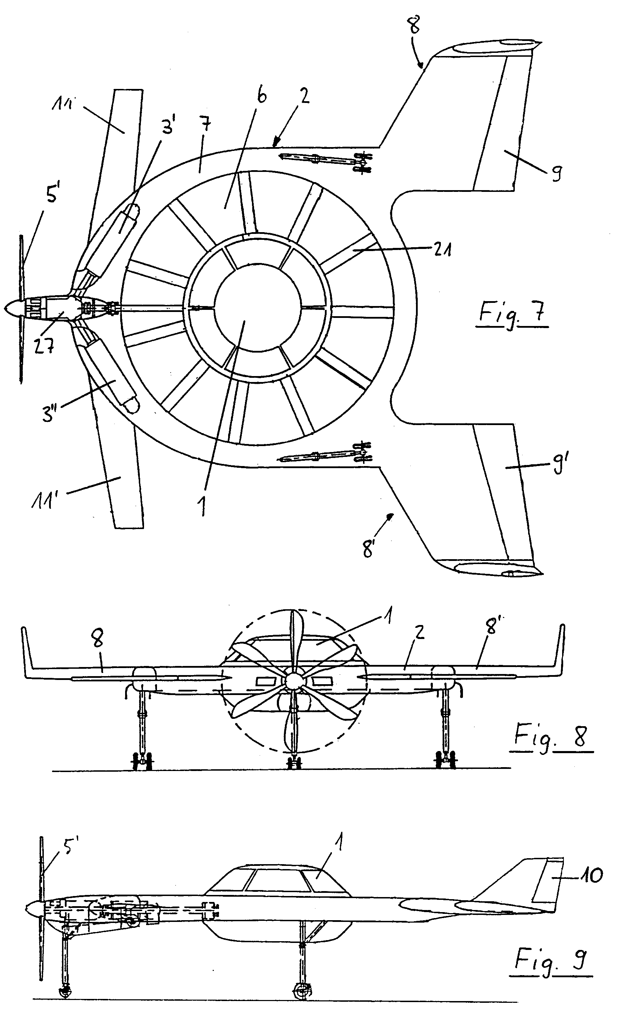

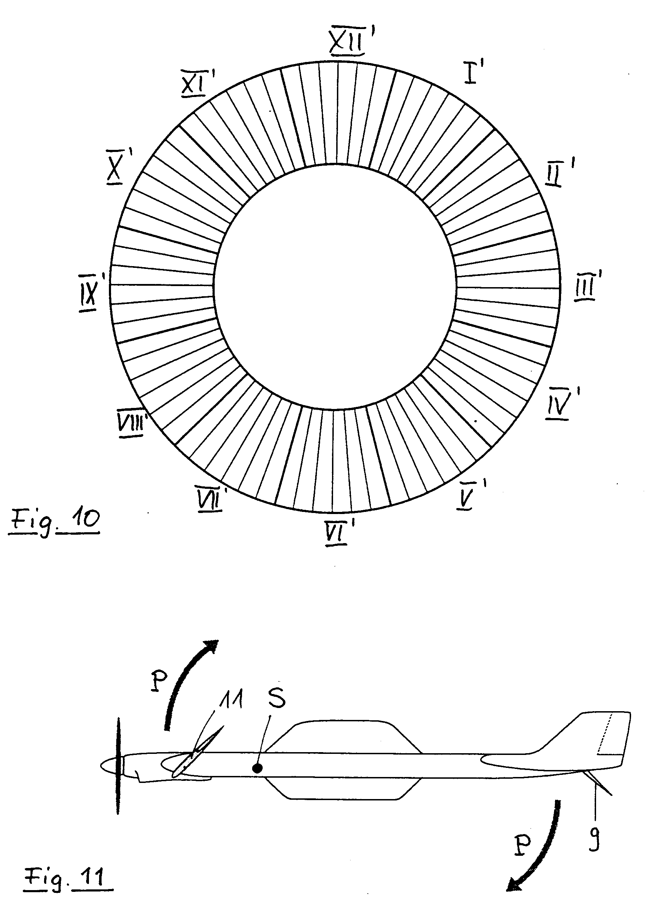

In den Figuren 7 bis 11 wird ein vorteilhaftes Ausführungsbeispiel des erfindungsgemässen Fluggeräts gezeigt. Im Vergleich zur Ausführung gemäss den Figuren 1 bis 6 weist es einige Unterschiede auf, die insbesondere aus den Figuren 7 und 10 ersichtlich sind.

Figur 7 zeigt, dass sich bei dieser Ausführung der Propeller 5' an der Nase des Flugzeugs befindet. Angetrieben wird er von zwei Turbinen 3' und 3'', deren Antriebskraft in einem Getriebe 27 vereint und auf den Propeller 5' gegeben wird. Dies kann z.B. direkt oder über ein geeignetes Reduktionsgetriebe geschehen. Der Antrieb des Rotors, der in diesem Falle elf Rotorblätter 21 aufweist, läuft wiederum über eine Antriebswelle, die z.B. über eine geeignete Kupplung mit dem Getriebe 27 gekoppelt ist. Mit dieser Kupplung, welche z.B. eine Oel- oder eine Magnet-Kupplung sein kann, wird der Rotor im angetriebenen Gleitflug von der Turbine abgekoppelt. Zur Steuerung des Vorschubs des Propellers 5' kann z.B. der Anstellwinkel seiner Blätter verändert werden. In einer derartigen Ausführung der Kraftübertragung kann somit auf das oben beschriebene Differentialgetriebe verzichtet werden.

Die Anordnung der Antriebsturbinen 3' und 3'' an der Spitze des Flugeräts führt zu einer Verlagerung des Schwerpunkts S des Fluggeräts gegen vorne. Dies bewirkt eine Verbesserung der Flugeigenschaften in der Uebergangsphase, wie es in Figur 11 illustriert wird. Wie bereits erwähnt führt das Zusammenwirken des Rotorstrahls mit der das Fluggerät umströmenden Luft in dieser Flugphase dazu, dass die Auftriebskräfte im vorderen Bereich des Rundflügels zu- und im hinteren Bereich abnehmen. Dadurch ergibt sich ein Drehmoment ("pitch"), welches in Figur 11 mit den Pfeilen P angedeutet wird. Diesem Drehmoment wird durch entsprechende Anstellwinkel der vorderen Stabilisierungsflügel 11,11' sowie der Höhenruder 9,9' entgegengewirkt. Liegt nun der Schwerpunkt S des Fluggeräts vor dem Auftriebszentrum des Fluggeräts, so entsteht ein zusätzliches Drehmoment, das der Stellwirkung P entgegentritt und die Wirkung der Stabilisierungsflügel 11,11' resp. der Höhenruder 9,9' unterstützt.

Die Anordnung der Lamellen des erfindungsgemässen Ausführungsbeispiels des Fluggeräts wird aus der Figur 10 ersichtlich. Im Gegensatz zum ersten Beispiel sind hier alle Lamellen radial angeordnet. Wiederum sind die Lamellen in unabhängige Felder (Steuersegmente I' bis XII') aufgeteilt, die individuell gesteuert werden. Alle zwölf Sektoren sind im wesentlichen gleich aufgebaut. Dieser modulare Aufbau führt zu einer Vereinfachung der Konstruktion, der Ersatzteillagerung und der Wartung. So kann z.B. ein einzelner defekter Sektor entfernt und durch einen funktionstüchtigen Sektor ersetzt werden.

Die Feinsteuerung des Vorschubs im Schwebeflug geschieht in dieser Ausführung vor allem durch eine Verstellung der Lamellenanstellwinkel in den Feldern III' und IX', während seitliche Verschiebungen vorwiegend über die Felder XII' und VI' kontrolliert werden. Zur Steuerung der Auftriebskraft können die Lamellen wie im ersten Ausführungsbeispiel paarweise gegenläufig verstellt werden.

Die Grobsteuerung des Vorschubs erfolgt über die Einstellung der Anstellwinkel der Blätter des Propellers 5'.

Die beiden beschriebenen Beispiele zeigen einige der Ausgestaltungsmöglichkeiten des neuen Fluggeräts. Weitere Varianten sind aber durchaus möglich. So kann z.B. die Form und Anordnung der Stabilisierungsflügel und des Leitwerks in weiten Bereichen variiert werden. Wichtig ist dabei vor allem, dass mindestens ein Teil der Leit- oder Stabilisierungsmittel ausserhalb der Wirkung des Rotorstrahls angeordnet ist, um insbesondere im Uebergangsflug gute Kontrollmöglichkeiten zu gewährleisten.

In allen Ausführungsarten des Fluggeräts lassen sich die Vorteile eines Helikopters mit denjenigen eines Flächenflugzeuges verbinden, wobei der Uebergang zwischen diesen Flugzuständen auf sichere Weise erzielt wird. Wie sich aus den Figuren 1, 2 und 5 entnehmen lässt, entspricht die Länge und "Spannweite" der vorliegenden, sechsplätzigen Ausführung des Fluggerätes im wesentlichen den Werten eines herkömmlichen, sechssitzigen Flugzeuges und liegt jeweilen z.B. im Bereich von 10 bis 15 Meter. Die erreichbare Höchstgeschwindigkeit entspricht den in dieser Flugzeugkategorie üblichen Werten. Das Fluggerät lässt sich deshalb im angetriebenen Gleitflug mit Flächenflugzeugen vergleichen, besitzt zusätzlich jedoch den Vorteil des Schwebefluges, so dass dem Helikopter entsprechende Flugmanöver ausgeführt werden können. Der beschriebene Aufbau eignet sich insbesondere auch für mittelgrosse Passagierflugzeuge, die im Liniendienst eingesetzt werden können.

## Patentansprüche

1. Fluggerät mit mindestens einem angetriebenen, in einem Gehäuse (2) liegend angeordneten Rotor (4), mittels welchem eine Auftriebskraft erzeugbar ist, die das Gewicht des Fluggerätes übersteigt, sowie mit Vortriebsmitteln zur Erzeugung einer Vortriebskraft in einer Hauptflugrichtung, wobei das Gehäuse (2) im wesentlichen als Rundflügel ausgebildet ist und im Bereich des Rotors Luftführungsmittel (14, 15) mit Lamellen (15) aufweist zur Beeinflussung des Rotorstrahles derart, dass mit den Lamellen (15) die Lage und Position des Fluggerätes im Schwebeflug steuerbar ist, wobei die Lamellen (15) in einzeln betätigbare Steuersegmente (I' bis XII') unterteilt sind zur Beeinflussung des Rotorstrahls, wobei zum Schwebeflug sämtliche Lamellen (15) für den Durchtritt des Rotorstrahls mehr oder weniger geöffnet sind, wobei die Lamellen (15) schliessbar sind, so dass sie zusammen eine im wesentlichen geschlossene Fläche bilden, wobei mindestens ein Teil der Lamellen zur Beeinflussung der Längsneigung des Fluggeräts paarweise gegenläufig verschwenkbar sind, und wobei der Rundflügel (2) bei Anströmung einen dynamischen Auftrieb erzeugt, dadurch gekennzeichnet, dass ausserhalb der Wirkung des Rotorstrahls Leitwerkmittel (8, 8'; 11, 11') angeordnet sind für die dynamische Erzeugung einer Steuerkraft zur Beeinflussung der Längsneigung des Fluggerätes in der Hauptflugrichtung, dass sich die Lamellen (15) in radialer Richtung erstrecken und dass alle Steuersegmente (I' bis XII') im wesentlichen gleich aufgebaut sind.

2. Fluggerät nach Anspruch 1, dadurch gekennzeichnet, dass die Leitwerkmittel (8, 8'; 11, 11') bezüglich der Hauptflugrichtung seitlich ausserhalb des Rotorstrahls angeordnet sind.

3. Fluggerät nach einem der vorangehenden Ansprüche, dadurch gekennzeichnet, dass die Leitwerkmittel (8, 8'; 11, 11') seitlich hinter und/oder vor dem Rotor (4) am Gehäuse (2) angeordnet sind.

4. Fluggerät nach einem der vorangehenden Ansprüche, dadurch gekennzeichnet, dass die Vortriebsmittel derart ausgestaltet sind, dass horizontale Geschwindigkeiten erreichbar sind, bei denen der entsprechende dynamische Auftrieb des Fluggeräts das Gewicht des Fluggeräts übersteigt.

5. Fluggerät nach einem der vorangehenden Ansprüche, dadurch gekennzeichnet, dass mittels der Lamellen (15) der Rotorstrahl zur Erzeugung einer Kraft in der Hauptflugrichtung beeinflussbar ist, womit die Vortriebsmittel mindestens teilweise durch die Luftführungsmittel gebildet werden.

6. Fluggerät nach einem der vorangehenden Ansprüche, gekennzeichnet durch mindestens ein Vortriebsaggregat (5;5') zur Erzeugung einer Kraft in der Hauptflugrichtung, wobei das Vortriebsaggregat im wesentlichen unabhängig vom Rotorstrahl ist, womit die Vortriebsmittel mindestens teilweise durch das mindestens eine Vortriebsaggregat gebildet werden.

7. Fluggerät nach einem der vorangehenden Ansprüche mit nur einem angetriebenen Rotor, dadurch gekennzeichnet, dass die Luftführungsmittel ein statisches Strömungsleitsystem mit mehreren radialen Leitschaufeln (14) aufweisen, die zwischen der Rotorebene und der Anordnung von schwenkbaren Lamellen angeordnet sind, um die rotative Komponente des Rotorstrahls aufzunehmen.

8. Fluggerät nach Anspruch 7, dadurch gekennzeichnet, dass die radial verlaufenden Leitschaufeln (14) Teil der Tragstruktur des Gehäuses sind.

9. Fluggerät nach einem der vorangehenden Ansprüche, dadurch gekennzeichnet, dass sich der Schwerpunkt (S) des Fluggeräts in Flugrichtung durch Anordnung der Antriebsaggregate an der Spitze des Fluggeräts vor dem Zentrum des Rotors (4) befindet.

10. Verfahren zur Steuerung des Fluggerätes nach einem der vorangehenden Ansprüche, wobei eine Schwebeflugphase, eine Gleitflugphase und eine Uebergangsphase vorgesehen sind, wobei in der Schwebeflugphase der Auftrieb durch den Rotor erzeugt wird, und die Lage sowie Bewegung im wesentlichen durch die Lenkung des Rotorstrahls durch die Lamellen erfolgt, und in der Gleitflugphase der Vortrieb durch die Vortriebsmittel, der Auftrieb durch die Anströmung des rundflügelartigen Gehäuses und die Steuerung durch die Leitwerkmittel erfolgt, dadurch gekennzeichnet, dass in der Uebergangsphase die Steuerung überlagernd sowohl durch die Lamellen als auch durch die Leitwerkmittel erfolgt.

11. Verfahren nach Anspruch 10, dadurch gekennzeichnet, dass in der Uebergangsphase durch die Leitwerkmittel im wesentlichen die Längsneigung beeinflussende Kräfte des Rotorstrahls kompensiert werden.

12. Verfahren nach einem der Ansprüche 10 oder 11, dadurch gekennzeichnet, dass in der Uebergangsphase die Lamellen zur Ablenkung des Rotorstrahls entgegen der Hauptflugrichtung eingestellt sind.

13. Verfahren nach einem der vorangehenden Ansprüche 10 bis 12, dadurch gekennzeichnet, dass in der Gleitflugphase die Lamellen geschlossen werden, so dass sie zusammen eine im wesentlichen geschlossene Fläche bilden.

## Claims

1. Flying vehicle with at least one driven rotor (4) arranged lying in a fuselage (2), by means of which a lifting force can be generated that exceeds the weight of the flying vehicle, as well as with thrust means for generating a forward thrust along a main direction of flight, wherein the fuselage (2) is designed substantially as a circular wing and comprises air guiding means (14, 15) with vanes (15) in the area of the rotor for influencing the rotor jet such that the orientation and position of the flying vehicle can be controlled in hover flight by means of the vanes (15), wherein the vanes (15) are divided into individually actuatable control segments (I' to XII') for influencing the rotor jet, wherein for hover flight all vanes (15) are more or less opened for the passage of the rotor jet, wherein the vanes (15) can be closed such that they form together a substantially closed surface, wherein at least a part of the vanes can be pivoted in opposite directions in pairs for influencing the pitch of the flying vehicle, and wherein the circular wing (2) generates a dynamic lift in an air stream, characterised in that outside the influence of the rotor jet flap means (8, 8'; 11, 11') are arranged for dynamic generation of a guiding force for influencing the pitch of the flying vehicle in its main direction of flight, that the vanes (15) extend radially and that all control segments (I' to XII')are substantially built identically.

2. Flying vehicle of claim 1 characterised in that the flap means (8, 8'; 11, 11') are arranged laterally outside the rotor jet in respect to the main direction of flight.

3. Flying vehicle of one of the preceding claims characterised in that the flap means (8, 8'; 11, 11') are arranged laterally behind of and/or in front of the rotor (4) on the fuselage (2).

4. Flying vehicle of one of the preceding claims characterised in that the thrust means are designed such that horizontal speeds can be reached at which the dynamic lift of the flying vehicle exceeds the weight of the flying vehicle.

5. Flying vehicle of one of the preceding claims characterised in that the rotor jet can be influenced by means of the vanes (15) for generating a force along the main direction of flight, whereby the thrust means are formed at least partially by the air guiding means.

6. Flying vehicle of one of the preceding claims characterised by at least one thrust assembly (5; 5') for generating a force along the main direction of flight, wherein the thrust assembly is substantially independent of the rotor jet, whereby the thrust means are formed at least partially by the at least one thrust assembly.

7. Flying vehicle of one of the preceding claims with only one driven rotor characterised in that the air guiding means comprise a static air guidance system with several radial guide vanes (14), which are arranged between the level of the rotor and the assembly of pivotal vanes for absorbing the rotative component of the rotor jet.

8. Flying vehicle of claim 7 characterised in that the radially extending guide vanes (14) are part of the support structure of the fuselage.

9. Flying vehicle of one of the preceding claims characterised in that the center of mass (S) of the flying vehicle is arranged in the direction of flight in front of the center of the rotor (4) by arranging the thrust assemblies at the nose of the flying vehicle.

10. Method for controlling the flying vehicle of one of the preceding claims wherein a hover phase, a cruise phase and a transition phase are provided, wherein in the hover phase the lift is generated by the rotor and the position as well as movement are substantially controlled by guiding the rotor jet by the vanes, and in the cruise phase the thrust occurs by the thrust means, the lift by the air stream around the circular wing shaped fuselage and the control by the flap means, characterised in that in the transitional phase the control occurs superimposed by the vanes as well as by the flap means.

11. Method of claim 10 characterised in that in the transitional phase forces influencing the pitch are substantially compensated by the flap means.

12. Method of one of the claims 10 or 11 characterised in that in the transition phase the vanes are positioned for deflecting the rotor jet against the main direction of flight.

13. Method of one of the preceding claims 10 to 12 characterised in that during cruise phase the vanes are closed such that they form a substantially closed surface.

## Revendications

1. Aéronef avec au moins un rotor (4) entraîné en rotation disposé horizontalement dans une carlingue (2) et pouvant produire une force ascensionnelle excédant le poids de l'aéronef, et avec des moyens de propulsion pouvant produire une force de progression dans une direction de vol principale, la carlingue (2) ayant essentiellement la forme d'une aile circulaire et présentant dans la région du rotor des éléments directionnels de flux d'air (14, 15) avec des lamelles (15) pour influencer le jet du rotor de façon à ce que les lamelles permettent de commander la position et l'orientation de l'aéronef en sustentation, les lamelles (15) étant divisées en des sections de commande (I' à XII') pouvant être commandées individuellement pour influencer le jet du rotor, toutes les lamelles (15) étant plus ou moins ouvertes en vol de sustentation pour laisser passer le jet du rotor, les lamelles (15) pouvant être fermées pour former ensemble une surface essentiellement continue, au moins une partie des lamelles pouvant pivoter par paires, à contresens l'une de l'autre, pour influencer l'inclinaison longitudinale de l'aéronef, l'aile circulaire (2) produisant une force ascensionnelle dynamique lorsqu'elle est attaquée par un flux d'air, caractérisé en ce que des empennages (8, 8'; 11, 11') sont agencés hors de l'influence du jet du rotor pour produire dynamiquement une force directionnelle influençant l'inclinaison longitudinale de l'aéronef en sa direction de vol principale, que les lamelles (15) s'étendent en direction radiale, et que tous les éléments directionnels (I' à XII') ont essentiellement la même structure.

2. Aéronef selon la revendication 1, caractérisé en ce que les empennages (8, 8'; 11, 11') sont placés latéralement par rapport à la direction de vol, hors du jet du rotor.

3. Aéronef selon une des revendications précédentes, caractérisé en ce que les empennages (8, 8'; 11, 11') sont placés latéralement sur la carlingue (2), derrière et/ou devant le rotor (4).

4. Aéronef selon une des revendications précédentes, caractérisé en ce que les moyens de propulsion sont conformés de manière à pouvoir atteindre des vitesses horizontales pour lesquelles la portance dynamique de l'aéronef excède son poids.

5. Aéronef selon une des revendications précédentes, caractérisé en ce que le flux du rotor peut être influencé par les lamelles (15) de manière à produire une force en la direction principale de vol, de façon à ce que la propulsion soit assurée au moins partiellement par les moyens directionnels de flux d'air.

6. Aéronef selon une des revendications précédentes, caractérisé par au moins un moyen de propulsion (5; 5') pour fournir une poussée en la direction de vol principale, le moyen de propulsion étant essentiellement indépendant du flux du rotor, les moyens de propulsion étant ainsi formés au moins en partie par ledit moyen de propulsion.

7. Aéronef selon une des revendications précédentes avec un seul rotor entraîné, caractérisé en ce que les éléments directionnels de flux d'air comportent un système directionnel statique comprenant plusieurs aubes radiales (14) disposées entre le plan du rotor et l'assemblage des lamelles mobiles pour recevoir la composante rotationnelle du flux du rotor.

8. Aéronef selon la revendication 7, caractérisé en ce que les aubes (14) s'étendant en direction radiale font partie de la structure portante de la carlingue.

9. Aéronef selon une des revendications précédentes, caractérisé en ce que son centre de gravité (S) se trouve en direction de vol devant le centre du rotor (4), grâce au placement des moyens d'entraînement à l'avant de l'aéronef.

10. Procédé pour piloter l'aéronef selon une des revendications précédentes pendant une phase de sustentation, une phase de vol plané et une phase de transition, la portance pendant la phase de sustentation étant assurée par le rotor tandis que l'orientation ainsi que le déplacement sont alors essentiellement assurés par l'orientation du flux du rotor au moyen des lamelles, la propulsion pendant la phase de vol plané étant assurée par les moyens de propulsion, la portance pendant cette phase étant assurée par le flux d'air autour de la carène en forme d'aile circulaire et le guidage par les empennages, caractérisé en ce que pendant la phase de transition le guidage est assuré de façon conjointe tant par les lamelles que par les empennages.

11. Procédé selon la revendication 10, caractérisé en ce que pendant la phase de transition les empennages servent essentiellement à compenser les forces du flux du rotor influant sur l'assiette longitudinale.

12. Procédé selon une des revendications 10 ou 11, caractérisé en ce que pendant la phase de transition les lamelles servant à dévier le flux du rotor sont orientées à l'opposé de la direction de vol principale.

13. Procédé selon une des revendications 10 à 12, caractérisé en ce que l'on ferme les lamelles pendant la phase de vol plané, de manière à ce qu'elles forment une surface essentiellement continue.
